# EUROPEAN PATENT SPECIFICATION

(11) **EP 2 707 975 B1**
(45) Date of publication and mention of the grant of the patent: **02.01.2019**
(21) Application number: 12781756.7
(22) Date of filing: 30.04.2012
(51) Int. Cl.: H04H 60/58, H04H 60/37

(54) **SYSTEM AND METHOD FOR RECOGNIZING BROADCAST PROGRAM CONTENT**
SYSTEM UND VERFAHREN ZUR ERKENNUNG VON RUNDFUNKPROGRAMMINHALTEN
SYSTÈME ET PROCÉDÉ DE RECONNAISSANCE DE CONTENU DE PROGRAMME DE RADIODIFFUSION

(30) Priority: 10.05.2011 SG 201103328
(43) Date of publication of application: 19.03.2014
(73) Proprietor: Voyager Innovations Holdings Pte. Ltd., Singapore 189702 (SG)
(72) Inventor: IBASCO, Alex D., Paranaque City (PH); JOSON, Eduardo Ramon G., Quezon City (PH); YU, William Emmanuel S., Pasay City (PH); DIAZ, Manuel O. (JR.), Camarines Sur (PH)
(74) Representative: Moore, Graeme Patrick
(86) International application number: PCT/SG2012/000155
(87) International publication number: WO 2012/154125

(56) References cited:
- EP-A1- 2 157 765
- EP-A2- 1 098 460
- WO-A1-2008/042953
- WO-A2-2009/042697
- GB-A- 2 375 263
- US-A1- 2006 003 753
- US-A1- 2009 276 801

## Description

### FIELD OF THE INVENTION

The present invention relates to a system and method for recognizing broadcast program content. The system and method are particularly suited, but not limited to recognize broadcast program content such as music which a communication device user is tuned to and will be described in this context.

### BACKGROUND ART

The following discussion of the background to the invention is intended to facilitate an understanding of the present invention only. It should be appreciated that the discussion is not an acknowledgement or admission that any of the material referred to was published, known or part of the common general knowledge of the person skilled in the art in any jurisdiction as at the priority date of the invention.

Current music recognition systems and methods typically involve the use of music recognition engines. Such music recognition engines typically employ some form of music recognition algorithm. A known music recognition algorithm typically obtains an audio sample, compares the audio sample with the entries in its database, and returns certain information available on the identified audio sample. Examples of music recognition engines include those described in US 2006/003753 and WO 2008/042953 which simply recognise and store data. Some systems as described in EP 1098460 can communicate with mobile devices by systems such as SMS as discussed in EP 2157765. The information can be provided in certain formats, for example automatically with a station ID as described in GB 2375263, or customised as discussed in US 2009/276801.

Current music recognition systems remained largely as a stand-alone function or as an online service accessible by multiple users. To enhance its capability to handle simultaneous requests from multiple users, online music recognition systems are generally implemented as a server farm with load balancing; that is, the music recognition system will have many instances of itself replicated in the server farm which share in the load when there is a deluge of simultaneous requests. Such implementation, however, assumes high bandwidth network connectively. Online recognition engines, despite having a high volume of requests, would still provide decent response times because they enjoy substantial Internet bandwidth.

However, when the current music recognition systems are implemented in a mobile service context, the model of server farm may not work as well. This is because of the limited bandwidth of mobile networks, which are usually GSM networks. In a mobile service supporting millions of users, the server load may become too heavy for the recognition engine to handle, thus resulting in unacceptable user experience and/or actual service failure. Such clogs and bottlenecks will also adversely affect non-data use of the network. Poor quality of service contribute strongly to higher subscriber churn, which in this age of near market saturation and stiff competition, could lead to a mobile network operator's demise.

In addition to the above, current prior art system in the context of mobile services requires the user to capture a snippet of this song as an audio clip and send the same to the song recognition engine. An audio clip, no matter how brief and regardless of the compression technique, is of considerable size.

The present invention seeks to provide a content recognition system and method that alleviates the above mentioned drawbacks.

### SUMMARY OF THE INVENTION

This invention was developed to address the challenge of reducing overhead that comes with music recognition requests, thus avoiding clogs and bottlenecks in the relatively low-bandwidth GSM network.

There is provided a broadcast program content recognition system comprising at least one receiver adapted to sample broadcast program content and a content recognition engine for recognizing and storing the sampled broadcast program content; wherein in event where the content recognition engine is unable to recognize the sample broadcast program content, the content recognition means splits the unrecognized sample into at least a first and a second sequential portions and appends the first portion or the second portion to a previously recognized sample.

Preferably, the system is adapted to iteratively split and append the unrecognized sample until either a terminating condition is reached or the appended first or second portion is recognizable.

Preferably, the system is adapted to mark the unrecognized sample as a failed sample.

In accordance with a third aspect of the present invention there is provided a method of recognizing broadcasted program content comprising the steps of:
a. receiving a sample of broadcasted program content;
b. determining if the received sample is recognizable;
c. splitting the received sample into a first and a second sequential portions if is determined not to be recognizable; and
d. appending the first portion to a previously recognizable sample.

Preferably, the method includes the step of repeating steps (b.) to (d.) until the appended sample is recognizable.

### BRIEF DESCRIPTION OF THE DRAWINGS

The present invention will now be described, by way of example only, with reference to the accompanying drawings, in which:

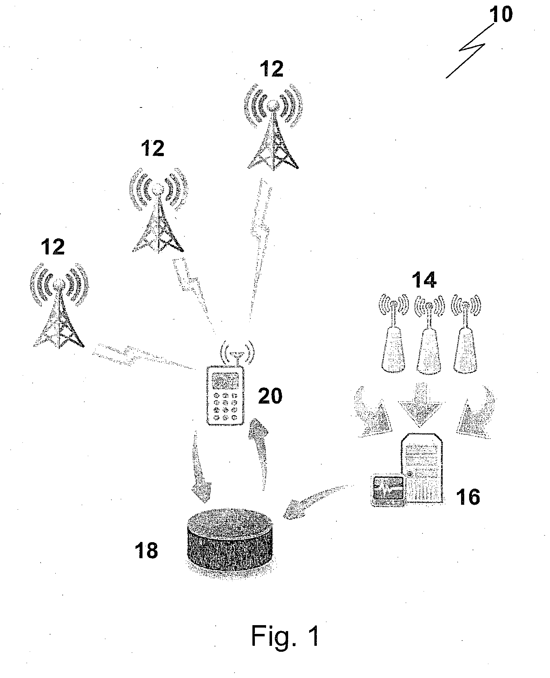

Fig. 1 is a schematic representation of a content recognition system in accordance with a first embodiment of the present invention.

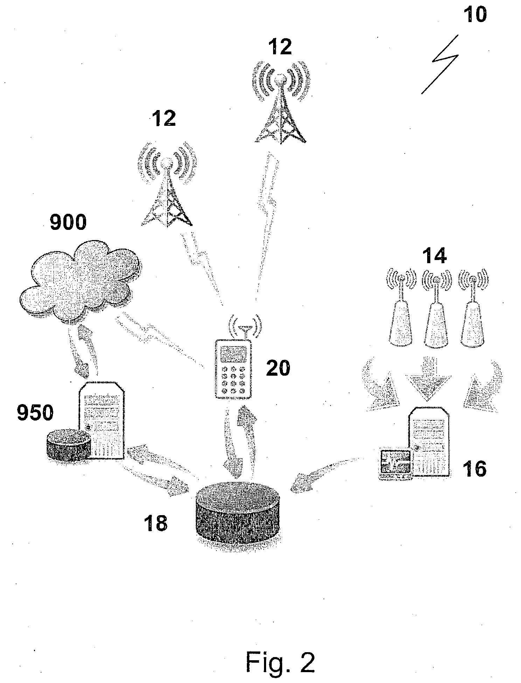

Fig. 2 is a schematic representation of a content recognition system in accordance with a second embodiment of the present invention.
Fig. 3 is a flow diagram illustrating the sampling algorithm according to embodiments of the present invention.

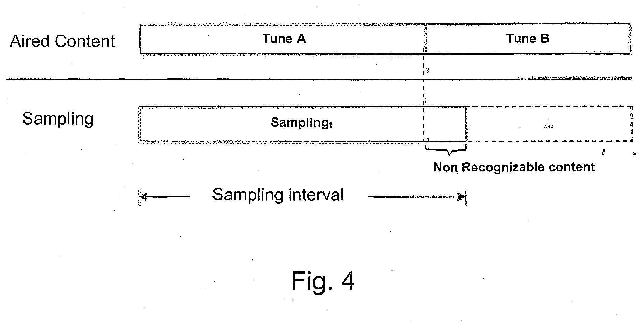

Fig. 4 is an illustration of a sample falling outside the content duration, which will result in a failure to be recognized by the content recognition system.
Fig. 5 illustrates splitting of an unrecognizable sample in various scenarios.

### DESCRIPTION OF EMBODIMENTS OF THE INVENTION

In accordance with a first embodiment of the present invention there is a broadcast program content recognition system 10. The content recognition system 10 comprises a plurality of broadcast receivers 14 each adapted to receive broadcasted program content from one or more broadcast source 12; a content recognition engine 16; and a content database 18. The broadcast sources 12 are typically broadcast stations. For the purpose of illustration, the broadcast sources 12 are frequency-modulated (FM) frequency broadcast stations. Each broadcast station 12 broadcasts program content in a different FM frequency bandwidth. For the purposes of illustration in this embodiment, the broadcast content from each broadcast sources is music, although it is easily appreciated that the broadcast content may be other audio content including audio advertisements etc.

Each receiver 14 is in communication with its corresponding broadcast source 12. It is to be appreciated that each receiver 14 may be co-located at the same area of the broadcast source or may be distributed geographically. Each receiver 14 is adapted to sample the broadcasted music from its corresponding broadcast source 12 continuously. Each receiver 14 is configured to sample broadcast program content at a sampling time t.

The music recognition engine 16 comprises a program which may be a third-party software application as known to a person skilled in the art (for example, SoundHound™). The music recognition engine 16 is adapted to receive and process the music samples from each receiver 14. The processing performed by the music recognition engine 16 comprises parsing and identifying the sample within a fixed recognition time.

The content database 18 is constantly populated by the content recognition engine 16. The data transmitted to the content database 18 from the recognition engine 16 may be in any desired format. For example, the content database 18 may have its own set of decoder which decodes the code from the recognition engine 16 and translates the same to pertinent information such as a song title, genre, artist, etc via a simple database lookup query, for example but not limited to SQL query. The content database 18 is adapted to receive queries from at least one client device 20, each query including time stamp and station ID that corresponds to the broadcast station 12 which the client devices 20 is tuned to. The content database 18 organizes the information received from the recognition engine 16 according to the time received and is thus able to provide a historical records of content received from the content recognition engine 16. The historical records which the user may obtain depends on the size and capacity of the database 18.

The client device 20 is typically a mobile device. In this embodiment, the mobile device 20 is enabled with a FM tuner so that the user of the mobile device 20 could tune in to a selected broadcast station 12. The mobile device 20 is adapted to be in data communication with the content database 18, and may query the content database 18 using data query mechanisms such as HTTP POST request, method invocation, keyword-based SMS query etc.

The system 10 will now be described in the context of its operation.

As an illustration, the user of mobile device 20 tunes to a particular broadcast station 12 of the plurality of broadcast stations 12 via adjusting the FM tuner incorporated in the mobile device 20. The user wishes to know the title of a broadcasted music tune which he/she is tuned to, hence he accesses the mobile device interface to send a query to the playlist database 18 based on the protocol as mentioned earlier (via HTTP POST, SMS query etc).

The content database 18 performs a simple lookup based on two parameters:
a. the time stamp of the query and
b. the station ID.

The content database 18 checks the time stamp of the query to determine if the time stamp falls within a fixed known sampling interval tₖ, which is the time period that the broadcast program content is certain to be playing. If the time stamp does not fall within the known sampling interval tₖ, the content database 18 returns a detection failure error to the client device 20, and optionally prompts the user of client device 20 to retry.

Typically, the value of the sampling interval t is determined by the music recognition algorithm considering the minimum sample time required to successfully identify the music sample. Any time interval shorter would effectively prevent the recognition engine 14 from identifying the audio sample.

However, in order to prevent the sampling from spanning across two different music samples, which prevents the recognition engine from identifying the sample, it is desirable to keep the sampling interval t as short as possible. It thus follows that in order to prevent sampling of overlapping samples, the sampling interval t should ideally be kept less than or at most equal to the playback length of the broadcasted content. Practically however, each broadcasted content will not have the same playback lengths, and thus the sampling interval t should be kept small, and at most equal to the playback length of the shortest broadcasted content. Even so, there will be the possibility of overlaps since the playback lengths of each broadcasted program content will vary. The approach in the embodiment is to match the sampling interval *t* with the minimum sampling interval required by the content recognition engine 16 employed, and resolve any overlapping samples. In the event where overlaps of sample occur (known as an overlap condition/scenario, a sample algorithm within the content recognition engine 16 will execute the necessary operations to resolve the overlap condition (described subsequently).

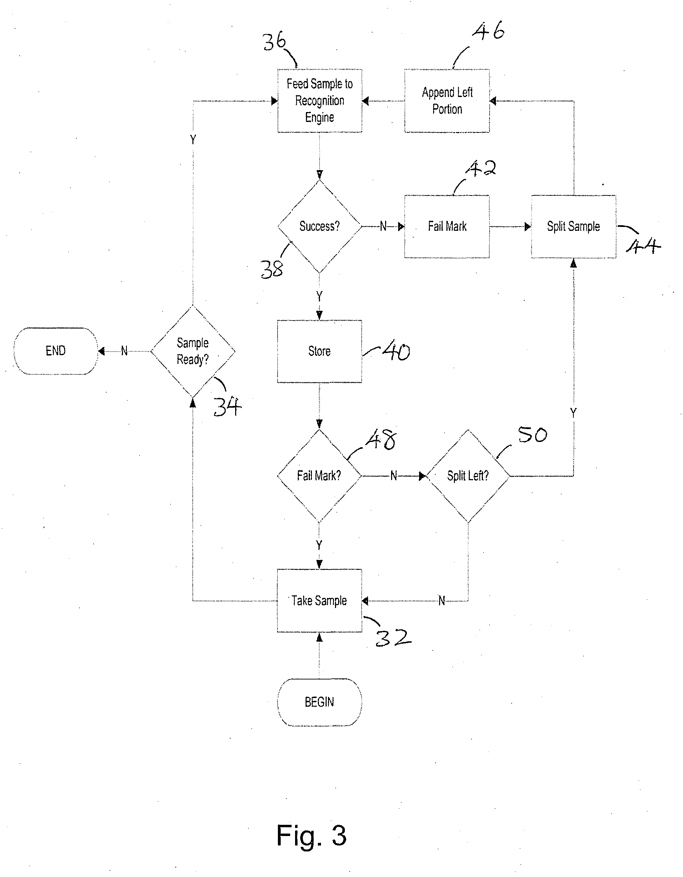

Regardless of whether requests are made by user(s), each receiver 14 continuously samples the music broadcasted by its broadcast station 12. The sampling is performed based on the sampling algorithm illustrated in Fig. 3 and described as follows:
The process begins by taking a sample of the broadcasted content from the broadcast source 12 (step 32). Although the sampling is continuous, but one sample is taken at a finite period is understood as the step of taking a sample.

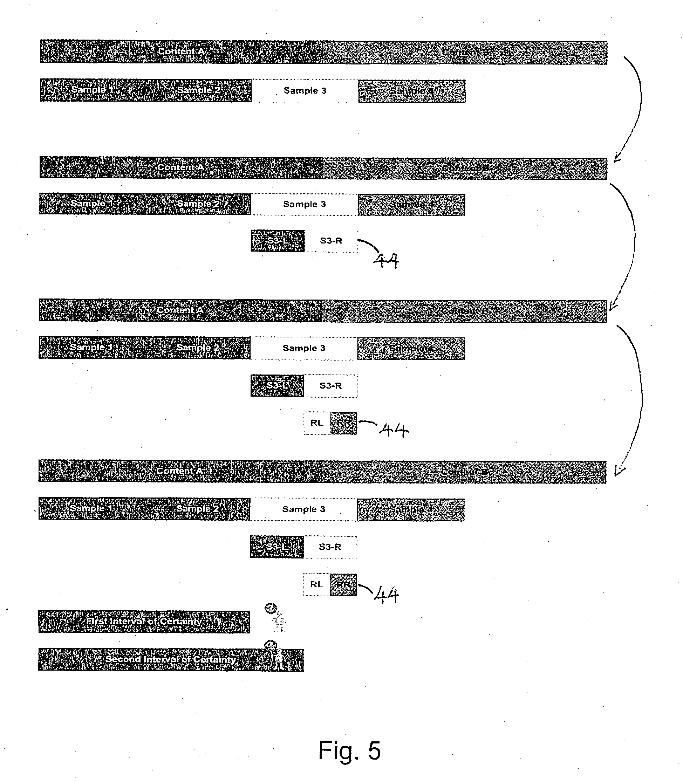

The algorithm checks if the sample is ready (step 34). The checking step includes verifying if a sample is available. By default, the sample is a raw sample. The checking step may alternatively be performed on a transcoded sample (i.e. includes an optional transcoding step which converts the raw sample to a hexadecimal, plain text, or any unique code). In such instance the checking step verifies the availability of the transcoded sample. Once the sample is ready, it is fed to the recognition engine 16 (step 36). The recognition engine 16 performs recognition of the content based on known techniques and checks if the recognition is successful (step 38). If the content recognition is determined to be successful, the information is stored in the content database 18 (step 40). The sample is also retained in a circular queue buffer. The circular queue buffer may be a First-In-First-Out queue system, and is a means for discarding buffered content is case the content is not required anymore. If the content recognition is not successful, then a fail mark is made (step 42). A failed recognition means that the sample falls into the category of the overlap condition and hence requires splitting (step 44), the steps of which are illustrated in Fig. 5. The split sample and a first portion are then appended to the previous sample which is held in a storage buffer queue (step 46). The concatenated sample is then fed to the content recognition engine (c.f. step 36). The process repeats until the sample is recognized and stored (step 40). If the recognition fails, half of the first portion of the earlier split sample earlier will be split and then appended to the previous sample in the buffer queue.

Step 44 is further described below and illustrated in Fig. 5.

Fig. 5 shows the program content A and B being played at a particular broadcast station 12 and the samples 1, 2, 3 and 4 taken while the program content A and B are played consecutively. It is easily appreciated that samples 1, 2 and 4 are definitive, i.e. content A can be ascertained using samples 1 and 2, while content B can be ascertained using sample 4. Sample 3, however, poses an overlap problem because part of sample 3 is taken while content A is aired and the other part of sample 3 is taken while content B is aired.

As a result, the recognition of sample 3 will fail based on step 38 as the music recognition algorithm would not be able to determine whether sample 3 should be associated with content A or content B. Upon detection of the failed sample 3, the sampling algorithm proceeds to mark the failed sample (step 42) and split the sample 3 into sample S3L (the first portion) and sample S3R. Upon appending Sample S3L to Sample 2, the content recognition engine would be able to make a valid recognition of Sample 2+S3L. However, sample S3R would still fail based on step 38 and thus remains as an overlap problem. The failed sample S3R then triggers another splitting of the sample RL and sample RR. It will be noted that appending RR to sample 4 will result in the valid identification of content B. Appending RL to either sample 2 or sample 4, however, will both result in the failure of the identification process. It is appreciated that while the illustration and description has described a scenario of 'left append', 'right append' (i.e. appending sample S3R to sample 3, for example) is equally supported by the system.

As illustrated in Figure 5, the interval of certainty increases as the overlap sample, sample 3, is split. Without the splitting step 44, the interval of certainty, that is, the period where the content recognition engine 16 is able to definitely identify the program content A aired, known as the First Interval of Certainty, is shorter because sample 3 falls on an overlap condition. A user query at the time after the First Interval of Certainty and falling within sample 3 would thus return an error.

Applying the splitting process/step 44, however, the interval of certainty is increased. The first portion Sample S3L is added to the First Interval of Certainty, resulting to the Second Interval of Certainty which is longer. Hence, the same user query falling within the Second Interval of Certainty would result in a positive identification of the program content A. For the same point of query as illustrated, results would be better under the Second Interval of Certainty.

Upon successful recognition, the samples and its information is stored and the recognition engine 16 updates the known interval *tₖ* to include the sampling time t plus the time taken for the appended portion. For each stored sample, the system checks whether a fail mark under step 42 has been made (step 48). If a fail mark is detected, it means that the sample recently processed is a split and concatenated/appended sample (as contrasted to a regular length sample), hence it would be time to move on to the next regular length sample (step 32). When there is no fail mark, the system checks whether there is a further split to process (step 50). If there is no other samples to process, the sampling algorithm proceeds to the next sample (step 32).

The process of splitting (step 44) and appending as described is iterative, but it has a terminating condition. Such condition may be dictated by business rules, such as fixing the number of iterations to a certain number *n,* or until *½t* is of duration a minimum sampling time *t*ₘᵢₙ . *tₘᵢₙ* is the minimum sampling time interval required to have a useful sample; any sample sampled for less than tₘᵢₙ will not be recognizable. *n* could be initially set to 2.

In accordance with a second embodiment of the invention, where like numerals reference like parts, there is a content recognition system 10.

The content recognition system 10 comprises a plurality of broadcast receivers 14 each configured to receive broadcasted program content from a broadcast source 12, a content recognition engine 16 and a content database 18. The broadcast sources 12 are typically broadcast stations. For the purpose of illustration, the broadcast sources 12 are FM frequency broadcast stations. Each broadcast station broadcasts program content in a different FM frequency bandwidth. For the purposes of illustration in this embodiment, the broadcast content from each broadcast sources is music, although it is easily appreciated that they may be other audio content including advertisements etc.

In addition to the first embodiment, there is a mobile network operator or application content manager 900 and a profiling database 950.

Instead of a regular query as described in the first embodiment, a client device 20 sends passive information on the station ID and the time stamp to the content database 18 on a regular basis without the need for the user to actively request the information. This may be done, for example, via the client device settings and will not be described in further detail. The passive information sent thus will be able to reflect if the user of client device 20 has switched to another station 12 (based on switch in the station ID). The passive information could be sent through the GSM network via SMS, MMS, IP, proprietary messaging mechanism etc. which the client device 20 is using, or through other available wireless connectivity such as Wi-fi, Bluetooth, Near Field Communication (NFC), and the like, if the client device 20 is so equipped.

The content database 18 is in data communication with the profiling database 950. Information from the content database 18 and profile database 950 may be further adapted, aggregated and consolidated (data-mined) to arrive at certain user-specific conclusion, for example, showing what specific content makes the user of client device 20 switch channels and what encourages them to stay tuned in, listening preference of the user, although other information could also be tracked, such as songs listened to, length of staying at a particular channel, content being aired when the user changed channels etc. The profiling database 950 feeds this information to the mobile network operator or the application content manager 900. The content manager 900 then is able to customize content for the mobile device 20 by way of suggestive marketing and targeted advertisements, such as for instance the availability for sale of optical media contents of the same genre as that preferred by the subscriber, or an upcoming concert of artists identified in such genre, and the like.

Information from content database 18 and profile database 950 may further be used in a variety of ways. Information on user behaviour can be aggregated and consolidated to show what specific broadcast program content makes the users of client devices 20 shift to another channel and what encourages them to stay tuned in. Information on the number of listeners tunning in the broadcast stations 12 at any given time would be available, making available information to the application content manager 900 on the best time/period to broadcast a particular program content. The information can then be used by content providers and broadcast stations 12 to determine relevant programming which would engage listeners more. In addition, this embodiment would also be relevant in rating the broadcast stations 12. It is appreciated that traditionally, the information gathering and rating is performed using means ranging from manual random surveys to automated data gathering using devices randomly deployed to households and individuals. With this embodiment, all mobile devices 20 with the built-in tuner may be accompanied with an integrated reporting system that allows the real-time determination of how many client devices 20 (and therefore end users) are listening to a particular broadcast channel 12 at any time. The current embodiment allows advertisers to be better advised on which broadcast channel 12 to use depending on the target audience.

The integrated reporting system mentioned above is implemented in the background and is similar to the passive information sent by the client device 20. The passive information could be a simple notification when a user of client device 20 tunes in to a particular channel, and such notifications are collated in a database report from which could be another service, accessible for free, on subscription basis, pay-per-view or other business models as may be determined subsequently.

The embodiment may further be used to rank the most played music over a defined territory. Without the need for any end user participation, the combined elements 14, 16, and 18 may be used to monitor and rank the music, song or album that is popular at any given time period . Listener density may likewise be determined based on the location and number of mobile devices 20. Further, location information may be provided by the mobile network operator 900 via the profiling database 950. With the information, geographic profiling can be made to deliver more relevant content and programming.

In further embodiments of the present invention the receivers 14 and music recognition engine 16 may be replaced by hybrid broadcast stations.

An associated advantage of the content recognition system 10 is the ability to track historical data. In this regard, when a user queries "what was that song that played recently?", the content database 18 retrieves the information and provides the song information.

In addition, the described embodiments is downward compatible with relatively older generation of user device as long as the device is sms enabled. In such a situation, the user may still send a simple text request (including the station id), and the system 10 will reply with a text message on the title of the song that was playing from the radio station, for example.

### Variants

▪ The profile database **950** and the location-based service arising from the combined elements **14, 16,** and **18** can be replaced with any relevant function equivalent, such as a record of previous transactions or events from the same user or any pattern which could be mined from available records.
▪ The continuous sampling by the receivers 14 may be performed 24/7.

## Claims

1. A broadcast program content recognition system (10) comprising at least one receiver (14) adapted to sample broadcast program content and a content recognition engine (16) for recognizing and storing the sampled broadcast program content; **characterized in that** in event where the content recognition engine (16) is unable to recognize the sample broadcast program content, the content recognition engine (16) splits the unrecognized sample (Sample 3) into at least a first (S3L) and a second (S3R) sequential portions and appends the first portion or the second portion to a previously recognized sample (Sample 2).

2. A system according to claim 1, wherein the system is adapted to mark the unrecognized sample as a failed sample.

3. A system according to claim 1, wherein the system is adapted to iteratively split and append the unrecognized sample until either a terminating condition is reached or the appended first or second portion is recognizable.

4. A broadcast program content recognition system according to any preceding claim wherein there is a content database (18) in data communication with the content recognition engine (16); the content database adapted to return information relating to the broadcast program content upon receipt of a query from a client device (20).

5. A system according to claim 4 wherein the client (20) is a mobile device adapted to receive the broadcast program content.

6. A system according to claim 4 wherein the query is a SMS query or a HTTP post query.

7. A system according to claim 4 wherein the query comprises the time stamp of the broadcast program content and an identification associated with the broadcast source (12).

8. A system according to claim 7 wherein the client device (20) is configured to automatically send station ID and the time stamp information to the content database (18) at regular time interval.

9. A system according to claim 8 wherein the content database (18) is further in data communication with an application content manager (900) adapted to process the station ID and time stamp information received to customize broadcast program content to the client device.

10. A system according to claim 8 wherein the station ID and time stamp information could be sent via SMS, MMS, IP, proprietary messaging, or other available wireless connectivity such as Wi-fi, Bluetooth or Near Field Communication (NFC).

11. A system according to claim 4, the system further comprises a profile database (950) in data communication with the content database (18), wherein information from the content database (18) and profile database (950) is adapted, aggregated and consolidated to arrive at certain user-specific conclusion.

12. A method of recognizing broadcasted program content comprising the steps of:
a. receiving a sample (Sample 3) of broadcasted program content;
b. determining if the received sample (Sample 3) is recognizable;
c. splitting the received sample (Sample 3) into a first (S3L) and a second (S3R) sequential portions if the sample is determined not to be recognizable; and
d. appending the first portion or second portion to a previously recognizable sample.

13. A method according to claim 12 wherein including the step of repeating steps (b.) to (d.) until the appended sample is recognizable.

## Patentansprüche

1. System (10) zur Erkennung eines Rundfunkprogramminhalts, umfassend zumindest einen Empfänger (14), der geeignet ist, Rundfunkprogramminhalt abzufragen, und eine Inhaltserkennungs-Engine (16) zum Erkennen und Speichern des abgefragten Rundfunkprogramminhalts;
**dadurch gekennzeichnet, dass** in dem Fall, dass die Inhaltserkennungs-Engine (16) nicht in der Lage ist, den abgefragten Rundfunkprogramminhalt zu erkennen, die Inhaltserkennungs-Engine (16) den nicht erkannten Abfragewert (Abfragewert 3) in zumindest einen ersten (S3L) und einen zweiten (S3R) aufeinanderfolgenden Abschnitt aufteilt und den ersten Abschnitt oder den zweiten Abschnitt an einen bereits erkannten Abfragewert (Abfragewert 2) anhängt.

2. System nach Anspruch 1, wobei das System geeignet ist, den nicht erkannten Abfragewert als fehlgeschlagenen Abfragewert zu kennzeichnen.

3. System nach Anspruch 1, wobei das System geeignet ist, den nicht erkannten Abfragewert iterativ aufzuteilen und anzuhängen, bis entweder eine Beendigungsbedingung erreicht ist oder der angehängte erste oder zweite Abschnitt erkennbar ist.

4. System zur Erkennung eines Rundfunkprogramminhalts nach einem der vorangegangenen Ansprüche, wobei eine Inhaltsdatenbank (18) in Datenkommunikation mit der Inhaltserkennungs-Engine (16) vorliegt; wobei die Inhaltsdatenbank geeignet ist, Informationen betreffend den Rundfunkprogramminhalt bei Empfang einer Anfrage von einer Client-Vorrichtung (20) zurückzusenden.

5. System nach Anspruch 4, wobei der Client (20) eine mobile Vorrichtung ist, die geeignet ist, Rundfunkprogramminhalt zu empfangen.

6. System nach Anspruch 4, wobei die Anfrage eine SMS-Anfrage oder eine http-Post-Anfrage ist.

7. System nach Anspruch 4, wobei die Anfrage den Zeitstempel des Rundfunkprogramminhalts und eine der Rundfunkquelle (12) zugeordnete Identifikation umfasst.

8. System nach Anspruch 7, wobei die Client-Vorrichtung (20) konfiguriert ist, die Stations-ID und die Zeitstempelinformationen in einem regelmäßigen Zeitintervall automatisch an die Inhaltsdatenbank (18) zu senden.

9. System nach Anspruch 8, wobei die Inhaltsdatenbank (18) weiters in Datenkommunikation mit einem Anwendungsinhalt-Manager (900) steht, der geeignet ist, die Stations-ID- und Zeitstempel-Informationen zu verarbeiten, um Rundfunkprogramminhalt an die Client-Vorrichtung anzupassen.

10. System nach Anspruch 8, wobei die Stations-ID- und Zeitstempel-Informationen über SMS, MMS, IP, proprietäre Nachrichtenübertragung oder eine andere verfügbare Drahtlosverbindung, wie z. B. WLAN, Bluetooth oder Nahfeldkommunikation (NFC), gesendet werden kann.

11. System nach Anspruch 4, wobei das System weiters eine Profildatenbank (950) in Datenkommunikation mit der Inhaltsdatenbank (18) umfasst, wobei Informationen aus der Inhaltsdatenbank (18) und Profildatenbank (950) angepasst, aggregiert und konsolidiert sind, um zu einer bestimmten anwenderspezifischen Entscheidung zu kommen.

12. Verfahren zur Erkennung von ausgestrahltem Programminhalt, das die folgenden Schritte umfasst:
a. Empfangen eines Abfragewerts (Abfragewert 3) von ausgestrahltem Programminhalt;
b. Bestimmen, ob der empfangene Abfragewert (Abfragewert 3) erkennbar ist;
c. Aufteilen des empfangenen Abfragewerts (Abfragewert 3) in einen ersten (S3L) und einen zweiten (S3R) aufeinanderfolgenden Abschnitt, wenn bestimmt wurde, dass der Abfragewert nicht erkennbar ist; und
d. Anhängen des ersten Abschnitts oder zweiten Abschnitts an einen bereits erkennbaren Abfragewert.

13. Verfahren nach Anspruch 12, wobei der Schritt des Wiederholens der Schritte (b.) bis (d.), bis der angehängte Abfragewert erkennbar ist, umfasst ist.

## Revendications

1. Système de reconnaissance de contenu de programme de radiodiffusion (10) comprenant au moins un récepteur (14) apte à échantillonner un contenu de programme de radiodiffusion, et un moteur de reconnaissance de contenu (16) destiné à reconnaître et stocker le contenu de programme de radiodiffusion échantillonné ;
**caractérisé en ce que**, dans le cas où le moteur de reconnaissance de contenu (16) n'est pas en mesure de reconnaître le contenu de programme de radiodiffusion échantillonné, le moteur de reconnaissance de contenu (16) fractionne l'échantillon non reconnu (échantillon 3) en au moins une première partie séquentielle (S3L) et une seconde partie séquentielle (S3R), et annexe la première partie ou la seconde partie à un échantillon précédemment reconnu (échantillon 2).

2. Système selon la revendication 1, dans lequel le système est apte à marquer l'échantillon non reconnu comme un échantillon défaillant.

3. Système selon la revendication 1, dans lequel le système est apte à fractionner et à annexer de manière itérative l'échantillon non reconnu jusqu'à ce qu'une condition de terminaison soit atteinte ou jusqu'à ce que la première partie ou la seconde partie annexée soit reconnaissable.

4. Système de reconnaissance de contenu de programme de radiodiffusion selon l'une quelconque des revendications précédentes, dans lequel il existe une base de données de contenus (18) en communication de données avec le moteur de reconnaissance de contenu (16) ;
dans lequel la base de données de contenus est apte à renvoyer des informations relatives au contenu de programme de radiodiffusion suite à la réception d'une requête provenant d'un dispositif client (20).

5. Système selon la revendication 4, dans lequel le dispositif client (20) est un dispositif mobile apte à recevoir le contenu de programme de radiodiffusion.

6. Système selon la revendication 4, dans lequel la requête est une requête SMS ou une requête de protocole HTTP POST.

7. Système selon la revendication 4, dans lequel la requête comprend l'estampille temporelle du contenu de programme de radiodiffusion et une identification associée à la source de radiodiffusion (12).

8. Système selon la revendication 7, dans lequel le dispositif client (20) est configuré de manière à envoyer automatiquement l'identifiant, ID, de station et les informations d'estampille temporelle à la base de données de contenus (18) à intervalles réguliers.

9. Système selon la revendication 8, dans lequel la base de données de contenus (18) est en outre en communication de données avec un gestionnaire de contenu d'application (900) apte à traiter l'identifiant de station et les informations d'estampille temporelle reçus en vue de personnaliser un contenu de programme de radiodiffusion au niveau du dispositif client.

10. Système selon la revendication 8, dans lequel l'identifiant de station et les informations d'estampille temporelle peuvent être envoyés par le biais d'une connectivité SMS, MMS, IP, de messagerie propriétaire ou d'une autre connectivité sans fil disponible telle que Wi-Fi, Bluetooth ou communication en champ proche (NFC).

11. Système selon la revendication 4, dans lequel le système comprend en outre une base de données de profils (950) en communication de données avec la base de données de contenus (18), dans lequel des informations provenant de la base de données de contenus (18) et de la base de données de profils (950) sont adaptées, agrégées et consolidées pour parvenir à une conclusion donnée spécifique à l'utilisateur.

12. Procédé de reconnaissance de contenu de programme de radiodiffusion comprenant les étapes ci-dessous consistant à:
a. recevoir un échantillon (échantillon 3) du contenu de programme radiodiffusé ;
b. déterminer si l'échantillon reçu (échantillon 3) est reconnaissable ;
c. fractionner l'échantillon reçu (échantillon 3) en une première partie séquentielle (S3L) et une seconde partie séquentielle (S3R) si l'échantillon est déterminé comme non reconnaissable ; et
d. annexer la première partie ou la seconde partie à un échantillon antérieurement reconnaissable.

13. Procédé selon la revendication 12, dans lequel le procédé inclut l'étape consistant à répéter les étapes (b.) à (d.) jusqu'à ce que l'échantillon annexé soit reconnaissable.
